(19) Europäisches Patentamt / European Patent Office / Office européen des brevets

(11) **EP 3 945 334 A1**

(12) **DEMANDE DE BREVET EUROPEEN**

(43) Date de publication:
**02.02.2022 Bulletin 2022/05**

(21) Numéro de dépôt: **21188436.6**

(22) Date de dépôt: **29.07.2021**

(51) Classification Internationale des Brevets (IPC):
**G01S 1/14** *(2006.01)* **G01S 1/04** *(2006.01)*

(52) Classification Coopérative des Brevets (CPC):
**G01S 1/14; G01S 1/0428**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(30) Priorité: **29.07.2020 FR 2007999**

(71) Demandeurs:
• **THALES**
**92400 Courbevoie (FR)**
• **Université de Bordeaux**
**33000 Bordeaux (FR)**
• **Institut Polytechnique de Bordeaux**
**33400 Talence (FR)**
• **Centre national de la recherche scientifique**
**75016 Paris (FR)**

(72) Inventeurs:
• **MAZEAU, Thierry**
**33701 MERIGNAC (FR)**
• **RENARD, Christian**
**78851 ELANCOURT (FR)**
• **GHIOTTO, Anthony**
**33130 BEGLES (FR)**
• **TOURISSAUD, Anaïs**
**33701 MERIGNAC (FR)**

(74) Mandataire: **Lavoix**
**2, place d'Estienne d'Orves**
**75441 Paris Cedex 09 (FR)**

(54) **SYSTÈME D'ANTENNE MULTIFAISCEAUX CONCENTRIQUES ET PROCÉDÉ D'ÉMISSION ASSOCIÉ**

(57) Système d'antenne (100) comprenant un réseau (120) d'éléments unitaires rayonnants et un module de contrôle, le système d'antenne (100) étant caractérisé en ce que :
- le module de contrôle est adapté pour, étant donné une répartition des éléments unitaires en N zones préfinies Z1, ..., ZN, N étant supérieur ou égal à 2, comportant chacune plusieurs éléments unitaires rayonnants, alimenter chaque élément unitaire de chaque zone Zi avec un signal d'alimentation Si_alim spécifique à la zone et fonction d'au moins un signal Si, lesdits N signaux Si, i= 1 à N étant séparables selon une propriété prédéfinie ;
- pour tout i =1 = N-1, la zone Zi est inscrite autour de la zone Zi+1 et chaque zone Zi, i=1 à N, d'éléments rayonnants est adaptée pour émettre spécifiquement ledit signal, Si_alim , selon un faisceau d'émission respectif avec une ouverture de faisceau respective, Fi, lesdits faisceaux Fi, i= 1 à N étant axés autour d'un axe commun (Z), normal à la surface rayonnante et passant par son centre (O), chaque zone étant symétrique par rapport audit centre.

FIG.1

**Description**

La présente invention propose des modes de réalisation d'une antenne et des moyens associés utilisés par une balise active de guidage et adaptés pour émettre simultanément dans une même direction des faisceaux électromagnétiques avec des ouvertures de faisceaux respectives (moyens décrits dans le brevet FR 19 13300 déposé le 17 novembre 2019).

Dans le cas du radioguidage d'un véhicule jusqu'à une position rapprochée de la balise, avec une précision de guidage de l'ordre de la dizaine de centimètres, voire de la dizaine de millimètres (par exemple : appontage d'un hélicoptère autonome sur un navire), des mesures d'écartométrie (par exemple à l'aide d'un radar embarqué dans le véhicule) peuvent être menées de façon précise sur un premier signal radiofréquence émis depuis la balise avec une première ouverture très faible et reçu par le véhicule, jusqu'à une première hauteur limitée (valeur de la première hauteur limite proportionnelle à la première ouverture), l'écartométrie étant ensuite réalisée successivement, au fur et à mesure de la descente du véhicule, à l'aide de signaux radioélectriques émis avec des ouvertures de plus en plus grandes.

A cet effet, suivant un premier aspect, l'invention propose un système d'antenne comprenant un réseau d'éléments unitaires rayonnants et un module de contrôle, le système d'antenne étant caractérisé en ce que le module de contrôle est adapté pour, étant donné une répartition des éléments unitaires en N zones préfinies Z1, ..., ZN, N étant supérieur ou égal à 2, comportant chacune plusieurs éléments unitaires rayonnants, alimenter chaque élément unitaire de chaque zone Zi avec un signal d'alimentation Si_alim spécifique à la zone et fonction d'au moins un signal Si, lesdits N signaux Si, i= 1 à N étant séparables selon une propriété prédéfinie ;

pour tout i =1 à N-1, la zone Zi est inscrite autour de la zone Zi+1 et chaque zone Zi, i=1 à N, d'éléments rayonnants est adaptée pour émettre spécifiquement ledit signal, Si_alim, selon un faisceau d'émission respectif avec une ouverture de faisceau respective, Fi, lesdits faisceaux Fi, i= 1 à N étant axés autour d'un axe commun, normal à la surface rayonnante et passant par son centre, chaque zone étant symétrique par rapport audit centre.

L'invention permet ainsi d'émettre des faisceaux simultanément depuis un même point, de façon simple et adaptable.

Dans des modes de réalisation, un système d'antenne suivant l'invention comporte en outre une ou plusieurs des caractéristiques suivantes :

- les éléments unitaires rayonnants sont des patchs et/ou des fentes ;
- le module de contrôle est adapté pour opérer selon un mode de stimulation simple et/ou un mode de stimulation contigüe, dans lequel :

    dans le mode de stimulation simple, le module de contrôle alimente exclusivement les éléments unitaires de la zone Zi avec le signal d'alimentation Si_alim = Si, i= 1 à N ;
    dans le mode de stimulation contigüe, le module de contrôle alimente exclusivement les éléments unitaires de la zone Zi avec le signal d'alimentation $Si\_alim= \sum_{n=1}^{i} Sn$, i= 1 à N ;

- la répartition des éléments unitaires en N zones correspond à l'une des configurations suivantes :

    - lesdites zones sont concentriques et apposées, de forme annulaire ou de type bordure rectangulaire ;
    - chaque zone Zi comporte au moins deux blocs d'éléments unitaires rayonnants, i= 1 à N, lesdites deux blocs de la zone Zi encadrant lesdites deux blocs de la zone Zi+1 ;
    - au moins un triangle d'éléments rayonnants unitaires est constitué, comportant une succession de N blocs adjacents d'éléments unitaires appartenant respectivement aux N zones successives Zi, i= 1 à N, chaque bloc comprenant une ou plusieurs rangées d'éléments unitaires disposés parallèlement à la base du triangle opposée au centre de l'antenne qui est aussi un sommet du triangle ;
    - des triangles d'éléments rayonnants unitaires sont constitués et joints par leur sommet opposé à leur base, les triangles étant similaires et comportant une succession de N blocs apposés d'éléments unitaires appartenant respectivement aux N zones successives Zi, i= 1 à N, et disposés parallèlement à la base.

Suivant un deuxième aspect, la présente invention propose un procédé d'émission utilisant un système d'antenne comprenant un réseau d'éléments unitaires rayonnants et un module de contrôle, ledit procédé étant caractérisé en ce qu'il comprend les étapes suivantes :

- étant donné une répartition des éléments unitaires en N zones préfinies Z1, ..., ZN, N étant supérieur ou égal à 2, comportant chacune plusieurs éléments unitaires rayonnants, alimenter, par le module de contrôle, chaque élément unitaire de chaque zone Zi avec un signal d'alimentation Si_alim spécifique à la zone et fonction d'au moins un signal Si, lesdits N signaux Si, i= 1 à N étant séparables selon une propriété prédéfinie ;

- émission par chaque zone Zi, i=1 à N, d'éléments rayonnants spécifiquement dudit signal, Si_alim, selon un faisceau d'émission respectif avec une ouverture de faisceau respective, Fi, pour tout i =1 à N-1, la zone Zi étant inscrite autour de la zone Zi+1, lesdits faisceaux Fi, i= 1 à N étant axés autour d'un axe commun, normal à la surface rayonnante et passant par son centre, chaque zone étant symétrique par rapport audit centre.

Dans des modes de réalisation, un procédé suivant l'invention comporte en outre une ou plusieurs des caractéristiques suivantes :

- les éléments unitaires rayonnants sont des patchs et/ou des fentes ;
- le module de contrôle opère selon un mode de stimulation simple et/ou un mode de stimulation contiguë, où :

  dans le mode de stimulation simple, le module de contrôle alimente exclusivement les éléments unitaires de la zone Zi avec le signal d'alimentation Si_alim = Si, i= 1 à N ;
  dans le mode de stimulation contiguë, le module de contrôle alimente exclusivement les éléments unitaires de la zone Zi avec le signal d'alimentation $Si\_alim= \sum_{n=1}^{i} Sn$, i= 1 à N ;

- la répartition des éléments unitaires en N zones correspond à l'une des configurations suivantes :

  - lesdites zones sont concentriques et juxtaposées, de forme annulaire ou de type bordure rectangulaire ;
  - chaque zone Zi comporte au moins deux blocs d'éléments unitaires rayonnants, i= 1 à N, lesdites deux blocs de la zone Zi encadrant lesdites deux blocs de la zone Zi+1 ;
  - au moins un triangle d'éléments rayonnants unitaires est constitué, comportant une succession de N blocs adjacents d'éléments unitaires appartenant respectivement aux N zones successives Zi, i= 1 à N, chaque bloc comprenant une ou plusieurs rangées d'éléments unitaires disposés parallèlement à la base du triangle opposée au centre de l'antenne qui est aussi un sommet du triangle ;
  - des triangles d'éléments rayonnants unitaires sont constitués et joints par leur sommet opposé à leur base, les triangles étant similaires et comportant une succession de N blocs apposés d'éléments unitaires appartenant respectivement aux N zones successives Zi, i= 1 à N, et disposés parallèlement à la base.

L'invention et ses avantages seront mieux compris à la lecture de la description détaillée qui va suivre d'un mode de réalisation particulier, donné uniquement à titre d'exemple illustratif non limitatif, cette description étant faite en se référant aux dessins annexés sur lesquels :

[Fig 1] La figure 1 est une représentation schématique de l'atterrissage d'un aéronef sur une piste en mettant en œuvre un ensemble de guidage intégrant une balise active de marquage du centre de la piste comportant un système d'antenne d'émission selon l'invention, et un radar multifaisceaux à bord de l'aéronef ;
[Fig 2] La figure 2 est une représentation schématique d'un mode de réalisation de la balise active de la figure 1 et dotée d'un système d'antenne selon l'invention ;
[Fig 3] La figure 3 est une représentation schématique d'une antenne dans un mode de réalisation de l'invention ;
[Fig 4] La figure 4 illustre le spectre des signaux S1, ...SN émis respectivement par les faisceaux F1, ..., FN ;
[Fig 5] La figure 5 est une représentation schématique d'une antenne dans un autre mode de réalisation de l'invention ;
[Fig 6] La figure 6 est une représentation schématique des diagrammes de rayonnement de l'antenne de la figure 5 ;
[Fig 7] La figure 7 est une représentation schématique d'une antenne dans un autre mode de réalisation de l'invention ;
[Fig 8] La figure 8 est une représentation schématique des diagrammes de rayonnement de l'antenne de la figure 7 ;
[Fig 9] La figure 9 est une représentation schématique d'une antenne dans un autre mode de réalisation de l'invention ;
[Fig 10] La figure 10 est une représentation schématique d'une antenne dans un autre mode de réalisation de l'invention ;
[Fig 11] La figure 11 est une représentation schématique de formes d'antenne en considérant un découpage de l'antenne en triangles ;
[Fig 12] La figure 12 est une représentation schématique d'une antenne dans un autre mode de réalisation de l'invention.

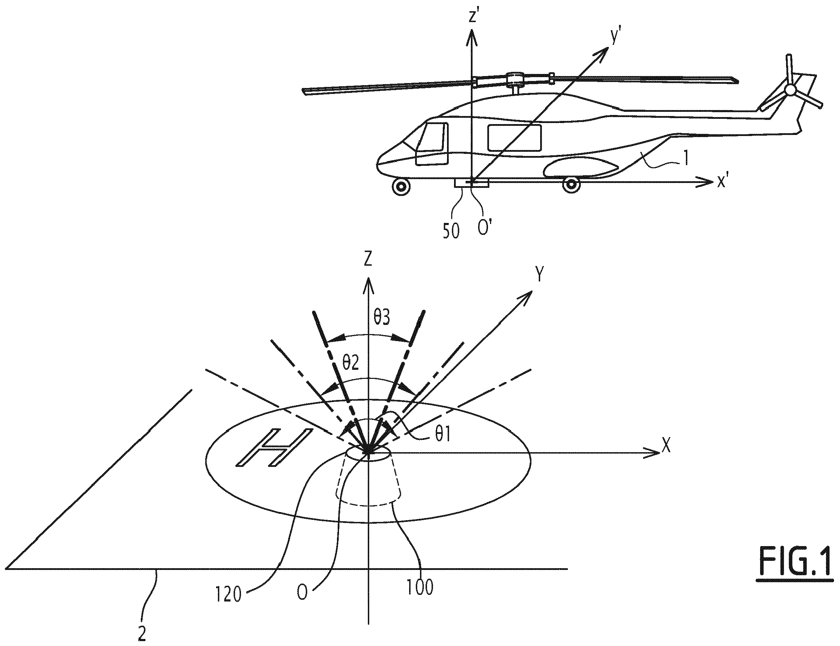

En se référant à la figure 1, un ensemble de guidage est utilisé lors de l'atterrissage d'un aéronef 1 sur une piste 2, de manière à amener l'aéronef 1 sur un point de référence O avec une précision élevée.

Un repère (O, X Y Z) est associé à la piste 2 de sorte que son origine coïncide avec le point de référence O. Le plan de la piste 2 est défini par les axes X et Y, tandis que la direction perpendiculaire à la piste 2, correspond à l'axe Z, qui est ici considéré comme vertical.

L'ensemble de guidage comporte une balise active 100 et un radar multifaisceaux 50.

La balise active 100 permet de marquer le point de référence O. La balise active 100 est par exemple implantée dans la piste 2.

Le radar multifaisceaux 50 est embarqué à bord de l'aéronef 1. Le radar multifaisceaux 50 est par exemple fixe par rapport à l'aéronef 1.

Un repère (O', X' Y' Z') est associé au radar multifaisceaux 50. Pour simplifier la présente description, une fois l'aéronef posé sur la piste 2 dans la position recherchée, le repère (O', X' Y' Z') coïncide avec le repère (O, X Y Z).

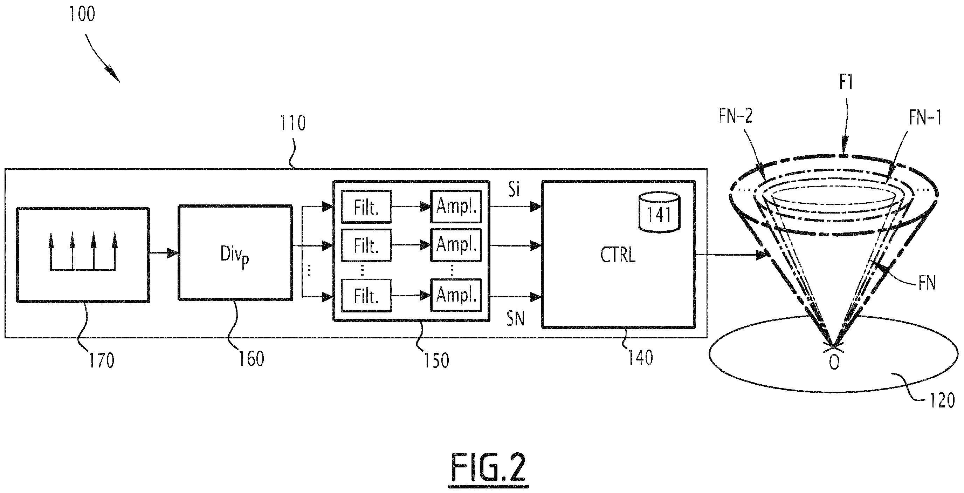

Comme représenté sur la figure 2, la balise active 100 intègre une antenne 120 et une chaîne d'alimentation 110 de l'antenne 120.

L'antenne 120 comporte une pluralité d'éléments rayonnants élémentaires, par exemple des patchs. Ces éléments rayonnants élémentaires sont répartis en des zones Zi prédéfinies, i= 1 à N.

Sur les figures, les éléments unitaires rayonnants d'une même zone portent un motif identique, les motifs de zones distinctes étant distincts.

La chaîne d'alimentation 110 intègre un générateur 170, un diviseur de puissance 160, un bloc d'alimentation 150 et un module de contrôle 140.

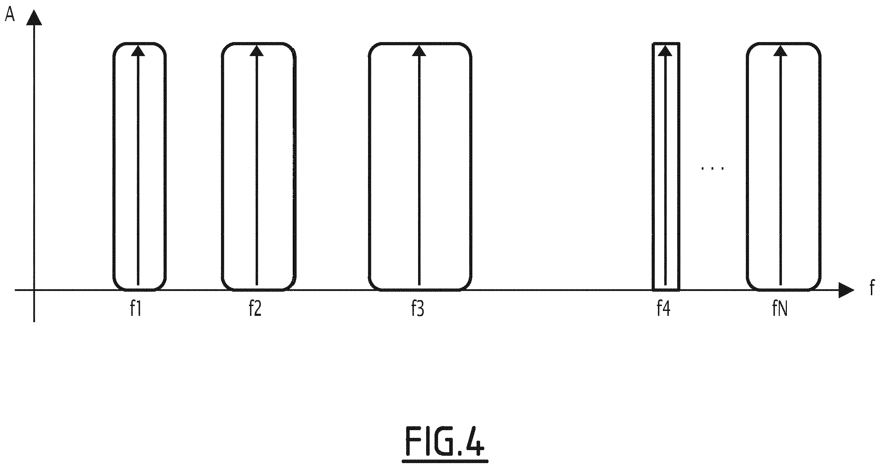

Le générateur 170 est adapté pour produire un signal d'alimentation portant la somme de N spectres à émettre par les faisceaux (comme dans l'exemple de la figure 4 avec chaque spectre élémentaire centré sur une fréquence respective allant de fi à $fN$) et qui comporte N composantes distinctes : la $i^{ème}$ composante est à la fréquence caractéristique fi, i = 1 à N, avec N supérieur ou égal à 2, comme représenté en figure 4.

En aval du générateur 170, un diviseur de puissance 160 est adapté pour séparer ce signal d'alimentation en N signaux d'alimentation élémentaires identiques.

Le bloc d'alimentation 150 comprend N chaînes d'alimentation comportant chacune un filtre et un amplificateur.

Chaque signal d'alimentation élémentaire est appliqué en entrée d'une chaîne d'alimentation, dont la sortie est connectée au module de contrôle 140.

Chaque ligne d'alimentation comporte un filtre suivi d'un amplificateur pour mettre en forme le signal d'excitation de l'élément rayonnant associé.

Plus précisément, le filtre de la $i^{ème}$ ligne d'alimentation permet de sélectionner, dans le signal d'alimentation élémentaire, la $i^{ème}$ composante de fréquence fi, i= 1 à N, à l'exclusion des autres composantes de fréquences fj, j≠i. Cette composante de fréquence fi est amplifiée par l'amplificateur et le signal résultant d'alimentation Si est fourni au module de contrôle 140.

Le module de contrôle 140 est adapté pour générer, en fonction des signaux Si, i = 1 à N, qui lui sont fournis, les signaux d'alimentation respectifs Si_alim, chaque signal Si_alim étant destiné à alimenter exclusivement la zone Zi prédéfinie.

Dans un mode de réalisation, le module de contrôle 140 est adapté pour opérer alternativement dans un premier mode d'alimentation, dit mode simple ou mode 1, et dans un deuxième mode d'alimentation, dit mode contigu ou mode 2, en fonction d'une commande préalable reçue indiquant le mode d'alimentation.

Dans d'autres modes de réalisation, le bloc de contrôle 140 est adapté pour fonctionner uniquement dans un seul mode opérationnel, parmi le mode simple et le mode contigu.

Le bloc de contrôle 140 est adapté pour, dans le mode simple, générer le signal d'alimentation Si_alim, i= 1 à N, tel que Si_alim = Si, et pour le fournir à chaque élément rayonnant unitaire de la zone Zi pour émission radiofréquence, par ce dernier, de Si_alim.

Le bloc de contrôle 140 est adapté pour, dans le mode contigu, générer le signal d'alimentation Si_alim, i= 1 à N, tel que $\mathrm{Si\_alim} = \sum_{n=1}^{i} Sn$ , et pour le fournir à chaque élément rayonnant unitaire de la zone Zi pour émission par ce dernier de Si_alim.

Dans chacun de ces deux modes, les émissions de Si_alim par les zones Zi sont par exemple simultanées.

Les différents faisceaux d'émission émis par les zones Zi d'une antenne 120 selon l'invention possèdent la même origine O et un même axe normal au plan rayonnant, cet axe commun, ou direction d'émission de la balise active, correspondant à l'axe Z.

Chaque zone Zi comporte un même centre de symétrie, qui est l'origine O. Les zones Zi sont inscrites successivement les unes autour des autres : chaque zone Zi est inscrite autour de la zone Zi+1. La zone Zi+1 obtenue en réduisant la zone Zi+1 autour de la même origine, sans recouvrement entre les deux zones. Les diagrammes de rayonnement résultants pointent dans la même direction, normale à l'antenne, en étant tous émis depuis le centre de la balise, mais avec des ouvertures différentes.

Plus précisément, comme représenté schématiquement en figures 1 ou 2, chaque zone Zi, i = 1 à N, est propre à émettre un signal électromagnétique, à l'intérieur d'une surface d'émission Fi, par exemple un cône d'émission Fi, telle que son sommet coïncide avec le point de référence O et que son axe coïncide avec l'axe Z. Les faisceaux d'émissions sont caractérisés par un angle d'ouverture dans les axes de symétries longitudinale et transversale du motif rayonnant. Ce cône d'émission Fi se caractérise par un angle d'ouverture $\theta_i$.

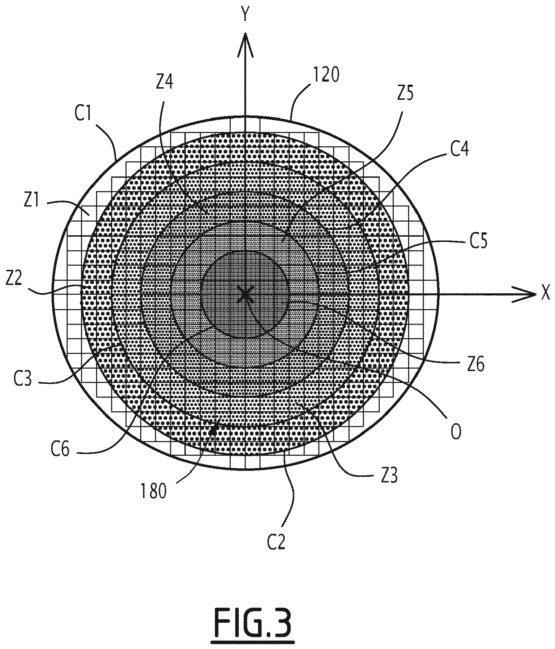

Dans un premier mode de réalisation correspondant à une première configuration de répartition des éléments unitaires rayonnants, ici des patchs, illustrée en figure 3, les patchs actifs 180 sont disposés de façon matricielle sur la surface d'antenne 120 dans le plan (X,Y), et dessinent une forme globale sensiblement circulaire. Ces patchs actifs 180 sont répartis en anneaux concentriques délimités par des cercles Ci, de rayon décroissant pour i allant de 1 à N (dans le cas représenté en figure 3, N = 6), l'anneau compris entre les cercles Ci et Ci+1 étant la zone Zi (l'anneau le plus petit, ici Z6 est en fait un disque).

Dans le cas d'un anneau rayonnant, les ouvertures des faisceaux sont proportionnelles aux diamètres et à la longueur d'onde des signaux rayonnés.

Le gain (en linéaire) dans l'axe de pointage Z, perpendiculaire à la surface d'antenne 120 est proportionnel au nombre d'éléments actifs 180 :

$$G_k = \frac{4.\pi.l^2}{\lambda^2}.N_k$$

$l^2$ = surface effective d'un élément unitaire rayonnant 180 ; $N_k$ = nombre d'éléments unitaires rayonnants ; $\lambda$ = longueur d'onde.

L'angle d'ouverture est : $\theta_k = 70.\frac{\lambda}{D_k}$ avec $D_k = \sqrt{\frac{N_k.l^2}{\pi}}$ (au premier ordre, l'ouverture angulaire du faisceau est fonction de la dimension de l'ouverture projetée suivant l'axe considéré et de la longueur d'onde).

Le bloc de contrôle 140 est adapté pour, en fonction de commandes reçues indiquant N et les ouvertures, ajuster les diamètres des anneaux et les longueurs d'ondes pour disposer N faisceaux d'ouvertures différentes ou identiques à des fréquences différentes.

En outre, cette solution présente l'avantage de diagramme de rayonnement à symétrie de révolution pour un anneau et une fréquence donnés.

Dans le cas de faisceaux émettant sur une fréquence identique et avec des gains identiques, un nombre identique de patchs figure dans chaque anneau.

Le disque central Z6 a le même nombre de patchs que l'anneau périphérique Z1 ayant le plus grand diamètre.

On définit :

*l = largeur d'un élément rayonnant unitaire*
*i = rang des éléments rayonnants dans le sens des abscisses, entier $\in$ [0,S]*
*j = rang des éléments rayonnants dans le sens des ordonnées, entier $\in$ [0,S]*

$$x_i = \sqrt{R^2 - y_j^2} = i.l = \textit{valeur de l'abscisse par ligne.}$$

*avec : $y_j = j.l$*

$$n_i = Ent\left(\frac{x_i}{l}\right) = \textit{valeur entière de } \frac{x_i}{l} = \textit{nombre d'éléments rayonnants par ligne}$$

$$R = S.l$$

$$n_i = Ent\left(\sqrt{S^2 - j^2}\right)$$

Le nombre total d'éléments rayonnants unitaires est :

$$N_T = 4 \sum_{i=0}^{S} n_i = 4 \sum_{j=0}^{S} Ent\left(\sqrt{S^2 - j^2}\right)$$

Nombre d'éléments rayonnants dans un anneau :

$$\Delta_{N_T} = N_{T_K} - N_{T_M} \; avec \; M < K, K \; et \; M \; entiers \; \epsilon \; [0, S]$$

$$\Delta_{N_T} = 4 \sum_{j=0}^{K} Ent\left(\sqrt{K^2 - j^2}\right) - 4 \sum_{j=0}^{M} Ent\left(\sqrt{M^2 - j^2}\right) = 4 \sum_{j=M}^{K} Ent\left(\sqrt{K^2 - j^2}\right)$$

Pour des ouvertures de faisceaux réparties en respectant une progression linéaire :

$\Theta_q = q.\Delta\Theta \; avec \; q = entier \in [1 \; ; N]$

$$\Delta\Theta = \frac{\Theta_T}{N}$$

avec :
$\Theta_T$ = ouverture minimum de l'antenne pour son diamètre maximum $D_T$
$N$ = nombre de faisceaux

$$\Theta_q = 70.\frac{\lambda}{D_q} \; d'où \; D_q = 70.\frac{\lambda}{\Theta_T}.\frac{N}{q}$$

$$N_q = \frac{D_q}{2.l} = 70.\frac{\lambda}{\Theta_T}.\frac{N}{q}.\frac{1}{2.l}$$

$$\Delta_{N_N} = 4. \sum_{j=N-1}^{N} Ent\left(\sqrt{N^2 - j^2}\right) = 4.Ent(\sqrt{2.N - 1}$$

D'où :

$$\Delta G_k = \frac{4.\pi.l^2}{\lambda^2}.\Delta_{N_N}$$

Dans un mode de réalisation des zones Zi annulaires concentriques, des éléments rayonnants unitaires sont tronqués pour être adaptés à la forme des anneaux, ou alors les éléments rayonnants non entiers sont supprimés, ce qui génère des lacunes et des irrégularités de forme dans les faisceaux.

Le bloc de contrôle 140 est adapté pour générer les faisceaux, dans le mode d'alimentation simple en faisant rayonner chaque anneau individuellement, et dans le mode contigu, en cumulant les anneaux, i.e. en associant les anneaux de diamètres inférieurs). Pour les anneaux les plus larges, l'association des anneaux de diamètres inférieurs permet d'obtenir un diagramme de rayonnement optimum, c'est-à-dire avec des lobes secondaires et des diffus minimums.

Dans le mode d'alimentation simple, les anneaux sont alimentés séparément pour créer un faisceau par anneau (Nota : dans le domaine fréquentiel, la fréquence porteuse est la fréquence centrale d'un spectre de modulation si le signal de stimulation est modulé, sinon la fréquence porteuse est réduite à une raie de fréquence (CW, Continuous Wave)).

Dans le mode contigu, le bloc de contrôle 140 est adapté pour stimuler (i.e. alimenter) l'anneau central ZN par l'ensemble des signaux présents (S1, ..., SN) sur chaque anneau, l'anneau ZN-1 doit pouvoir être stimulé par N-1 signaux, jusqu'au dernier anneau Z1 (le plus grand) stimulé par un seul signal (S1) (dans un mode de réalisation, les stimulations sont simultanées, dans un autre mode de réalisation elles ne sont pas simultanées mais se succèdent dans le temps).

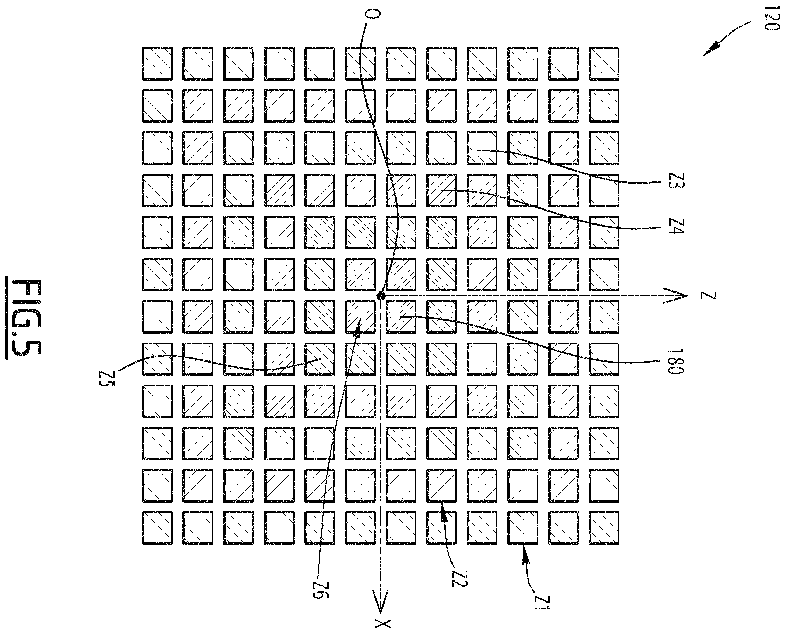

Dans un autre mode de réalisation illustré en figure 5, les patchs actifs 180 disposés en matrice dessinent cette fois une forme globale carrée ou rectangulaire ; chaque zone Zi, i=1 à N est ainsi une bordure d'un carré (ou rectangle) encadrant la zone Zi+1. Dans cet exemple illustré en figure 5, N=6 et chaque zone a une épaisseur (ou largeur) d'un patch. Les zones Zi sont des « anneaux » carrés (ou rectangulaires) concentriques.

Ce mode de réalisation permet de garder les patchs entiers ou d'éviter des lacunes d'éléments rayonnants, donc de disposer d'une répartition des éléments rayonnants plus régulière.

De plus, ce mode de réalisation permet de simplifier le réseau d'alimentation radiofréquence par rapport au premier mode de réalisation. Comme pour le premier mode de réalisation, ces anneaux sont activés soit un à un (mode simple), soit par ajout ou suppression progressif de zones contiguës (mode contigu) en partant du centre.

Une forme rectangulaire permet d'obtenir des ouvertures différentes dans l'axe transversal par rapport à l'axe longitudinal et les plans orientés dans les sens des diagonales.

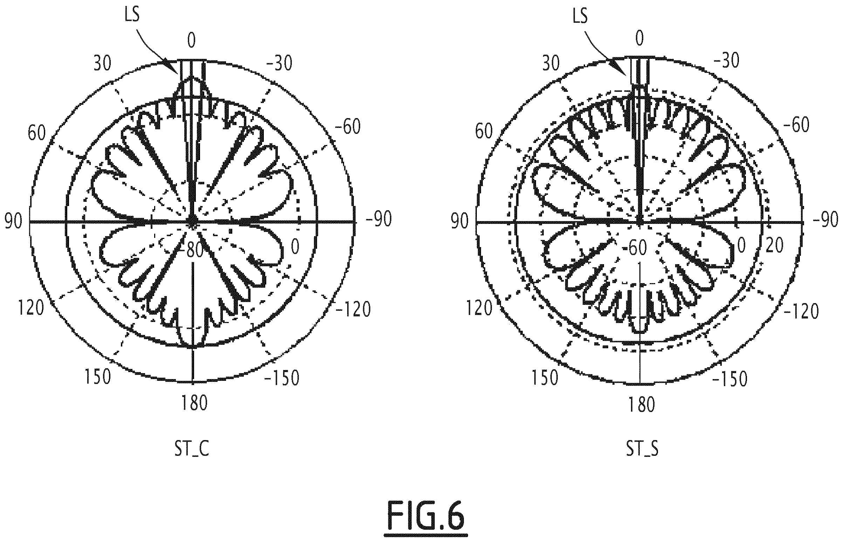

La figure 6 représente schématiquement le diagramme de rayonnement (Degrés versus dBi) obtenu avec une répartition de l'antenne 120 en zones Zi, i= 1 à N, telle que représentée en figure 5 avec un mode d'alimentation simple (ST_S) du dernier anneau et un mode d'alimentation contigu (ST_C) de l'antenne complète.

Les lobes secondaires LS ne sont pas problématiques dans le cas ST_C. En revanche, dans certaines applications, les lobes secondaires LS du cas ST_S peuvent nuire au fonctionnement du système. Des variantes proposées ci-après permettent de répondre à ce point.

Par exemple, l'épaisseur (ou largeur) de chaque anneau carré ou rectangulaire peut être étendue d'un patch à plusieurs patchs. Par exemple, en partant de l'exemple illustré en figure 5, Z1 peut être fusionnée à Z2 et Z3 (épaisseur de la zone résultante Z1' passe à 3 patchs), et les zones Z4, Z5, peuvent être fusionnées en une zone Z2' d'épaisseur 2 patchs. L'avantage est d'atténuer les lobes secondaires, le désavantage est de limiter le nombre de faisceaux créés qui est dans ce cas-là de 3 au lieu de 6 pour un nombre total d'éléments rayonnants unitaires identique.

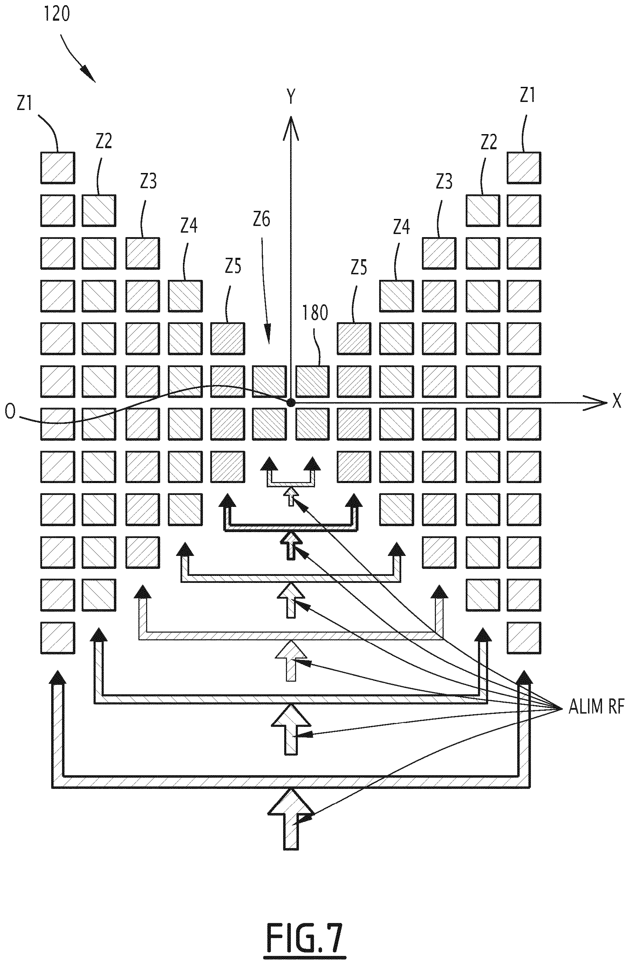

Une autre variante est illustrée en figure 7. Les patchs 180 actifs de l'antenne 120 disposés de façon matricielle ont globalement une forme « papillon ». Comparée à la figure 5, cette configuration représentée en figure 7 correspond à n'utiliser que la moitié du motif du réseau de patchs carré ou rectangulaire en ne conservant que les rangées ou colonnes.

Chacune des N (N=6 ici) zones est ainsi constituée de deux blocs de patchs 180 s'étendant le long d'une direction, ici l'axe Y. Les deux blocs de la zone Zi encadrent les deux blocs de la zone Zi+1, i= 1 à N-1, un bloc de la zone Zi étant adjacent à un bloc de la zone Zi+1. La longueur de la zone Zi (le long de l'axe Y) est supérieure à celle de la zone Zi+1.

Une telle configuration permet de simplifier l'alimentation RF d'un réseau carré ou rectangulaire, tout en conservant les caractéristiques d'un réseau carré ou rectangulaire dans un des axes transversal ou longitudinal.

Les faisceaux obtenus sont asymétriques. En effet, ce ne sont pas des cônes circulaires droits puisque le réseau de patchs n'est pas symétrique selon les deux axes. Les faisceaux seront donc des cônes elliptiques avec le grand rayon de l'ellipse dans l'axe opposé à celui dans lequel sont disposés les lobes principaux.

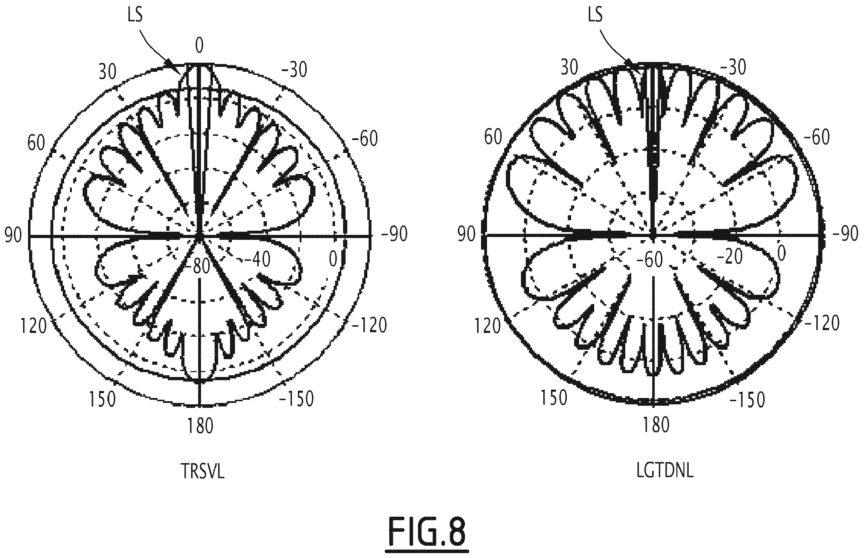

La figure 8 fournit le diagramme de rayonnement en coupe pour un mode d'alimentation contigu de l'ensemble de l'antenne de la figure 7 selon l'axe transversal (TRSVL) et l'axe longitudinal (LGTDNL). Des lobes secondaires LS sont trop élevés selon un seul axe, ce qui découle de la forme du réseau utilisé et des patchs manquants par rapport au réseau rectangulaire de la figure 5.

Un mode d'alimentation simple pour cette forme de réseau en papillon accentue l'amplitude des lobes secondaires selon un des deux axes par rapport au lobe principal. L'alimentation simple d'un tel réseau permet de créer un éventail de faisceaux d'amplitudes très proches. Plus les lignes alimentées sont éloignées du centre du faisceau (ici le cas le plus loin possible) et plus le nombre de lobes d'amplitudes similaires est grand dans cet éventail. Ce type de faisceau est particulier et peut être adapté à des applications spécifiques.

Comme indiqué précédemment, l'épaisseur des blocs de chaque zone peut être augmentée à plusieurs patchs plutôt que d'avoir une épaisseur d'un patch. Par exemple, les blocs apposés des zones Z1 et Z2 peuvent être fusionnés en une seule et même zone Z1', les blocs apposés des zones Z3 et Z4 peuvent être fusionnés en une seule et même zone Z2', les zones initiales Z5 et Z6 restant inchangées, ce qui résulte en une partition en 4 zones. Ce mode de réalisation limite le nombre de faisceaux toujours pour un nombre total d'éléments identiques à la solution précédente, mais il présente un avantage de générer un diagramme de rayonnement en forme d'éventail moins diffus et plus regroupé selon l'axe Z tel un bouquet.

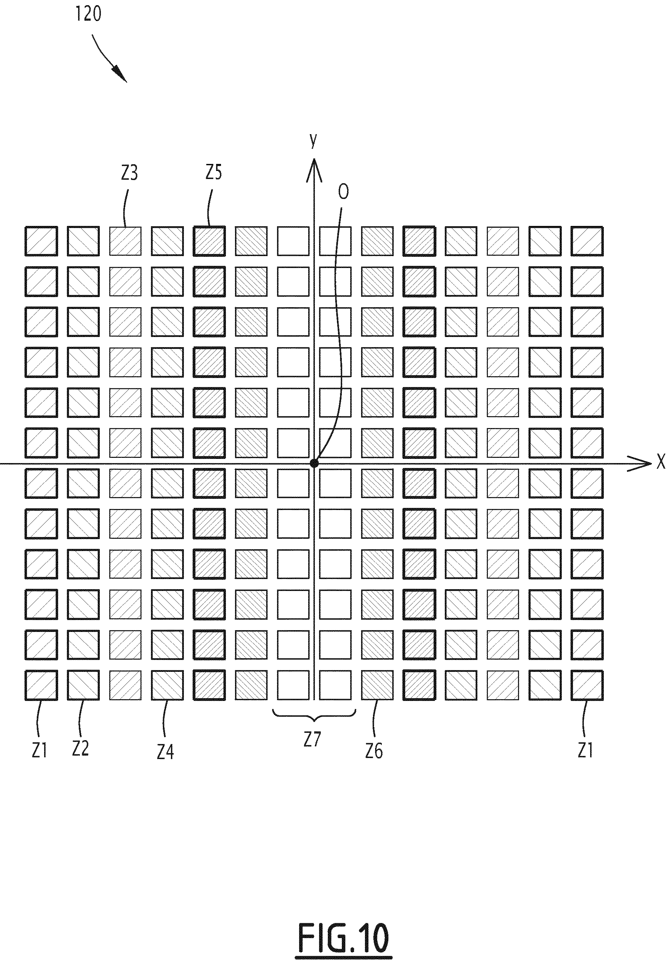

Dans un autre mode de réalisation illustré en figure 10, comme précédemment, chaque zone Zi, i= 1 à N (N=7 dans le cas représenté en figure 7) est constituée de deux blocs de patchs 180 s'étendant le long d'une direction, ici l'axe Y. Les deux blocs de la zone Zi encadrent les deux blocs de la zone Zi+1, i= 1 à N-1, un bloc de la zone Zi étant adjacent à un bloc de la zone Zi+1 et cette fois, tous les blocs d'éléments rayonnants de toutes les zones Zi ont la même longueur, ce qui a pour effet de créer un ou des faisceaux selon un seul axe.

En stimulant les deux blocs du centre, on obtient un disque dont l'épaisseur est proportionnelle à la longueur du rectangle de patchs et dont l'ouverture est proportionnelle au nombre de rangées.

L'avantage de cette configuration est de diminuer les niveaux des lobes secondaires par rapport aux modes de réalisation en forme de papillon.

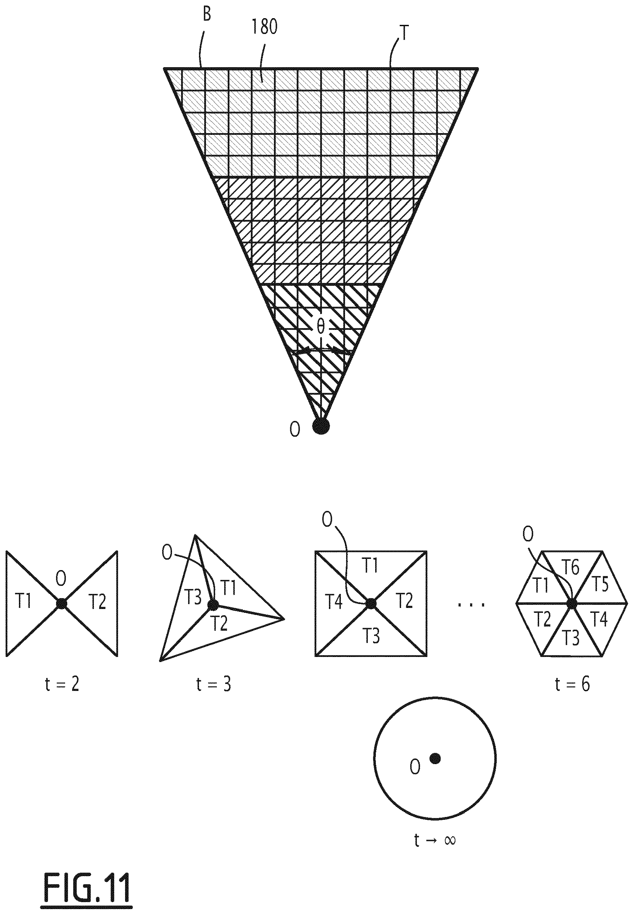

Dans un mode de réalisation, chaque configuration d'antenne répartie en zones Zi selon l'invention peut être vue comme un assemblage de t triangles (t entier strictement positif) du même type T, tel celui représenté en figure 11, i.e. comportant une succession de N (dans l'exemple du type T de la figure 11, N=3) colonnes d'éléments unitaires 180 correspondant respectivement aux N zones successives Zi, i= 1 à N, et disposées parallèlement à la base B, la taille des colonnes décroissant depuis ladite base du triangle vers le sommet O opposé à la base ; la largeur des colonnes, en terme de nombre de patchs peut être variable et est égale à la largeur, en nombre de patchs, de la zone à laquelle appartient la colonne (dans l'exemple de la figure 11, elles sont de largeur 4 patchs, 3 patchs et 7 patchs) ;

Et typiquement, la forme papillon de la figure 7 peut être vue comme l'assemblage de deux triangles T1, T2 (t=2) d'un même type, la configuration illustrée en figure 5 correspond à t = 4, la configuration circulaire correspond à un cas où t tend vers l'infini.

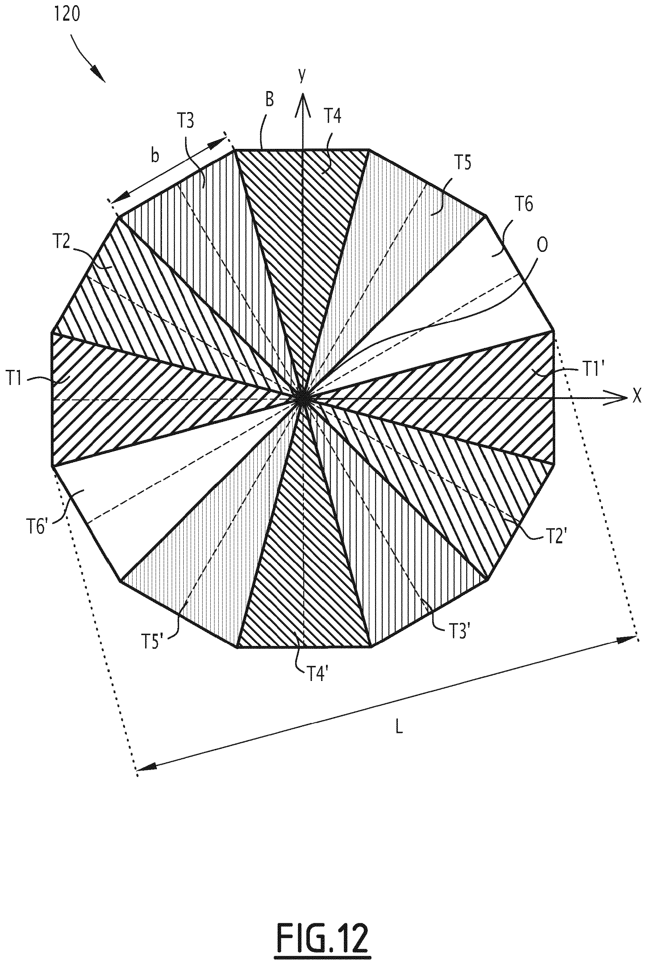

La figure 12 représente une antenne 120 polygonale d'éléments rayonnants unitaires. La forme papillon décrite précédemment en référence à la figure 7, selon le polygone souhaité avec optionnellement rétrécissement de la plus longue rangée et/ou allongement de la largeur de la matrice en épaississant chaque zone, correspond aux deux triangles T1, T1' symétriques par rapport au centre O (la répartition en N zones est également symétrique entre ces deux triangles par rapport à O). Ce motif est ensuite dupliqué et décalé à plusieurs reprises avec une rotation d'un angle $\Theta$ autour de O à chaque fois. Les bases B des triangles formant le polygone résultant sont définis comme étant les côtés des triangles superposés à la périphérie du polygone. Les axes du polygone sont définis comme étant les droites passant par le centre de chaque face opposée du polygone et donc aussi par son centre O. Le polygone obtenu est formé de triangles identiques réunis par les sommets opposés à leurs bases, les sommets étant situés au centre du polygone.

La valeur de cette rotation est aussi l'ouverture des triangles formant le polygone.

Dans ce mode de réalisation, en fonction du nombre de côtés (C) du polygone souhaité, $\Theta = \frac{2\pi}{C}$, la longueur (b) de la base B d'un triangle du réseau rayonnant est déterminée par $b = L.\tan(\frac{\Theta}{2})$.

La hauteur H d'un des triangles est dimensionnée par : $H = \sqrt{\left(\frac{L}{2}\right)^2 - \left(\frac{b}{2}\right)^2}$.

Le nombre d'éléments rayonnants contenus dans la hauteur est $K = \frac{L}{l}$ avec l = largeur d'un élément rayonnant.

Le nombre de rangées par antenne (R) est fonction du nombre de faisceaux souhaité (J) $R = \frac{K}{J}$.

Le diagramme de rayonnement d'un tel polygone est semblable à celui de forme papillon précédemment décrit, papillons orientés selon les axes du polygone : on obtient donc des diagrammes semblables à celui du papillon dans chaque axe du polygone.

Dans un mode de réalisation, la structure polygonale comporte un nombre impair de triangles, le rayonnement résultant étant dissymétrique.

L'antenne 120 a été décrite ci-dessus comme comportant des éléments rayonnants unitaires de type patchs, mais bien sûr les éléments rayonnants unitaires peuvent être de type autre, par exemple l'antenne est une antenne à fentes comportant des guides rayonnants à fentes qui remplacent les colonnes de patchs des exemples cités dans la présente demande.

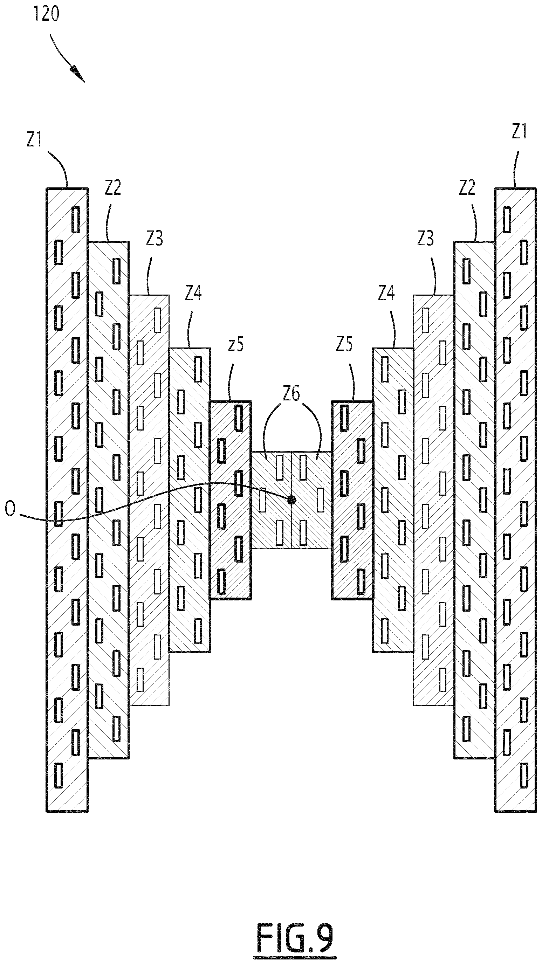

Dans l'exemple de l'antenne 120 illustrée schématiquement en figure 9, chaque zone Zi, i= 1 à N, constituée par un guide à fentes, remplace la zone Zi de la figure 7.

Le diagramme de rayonnement d'un mode tel de réalisation sera sensiblement le même qu'avec des patchs. De la même manière que pour les autres modes de réalisation, le procédé d'épaississement des zones Zi peut s'appliquer : on peut accroître le nombre de guides par zone Zi afin notamment de diminuer les lobes secondaires.

Un procédé d'émission de faisceaux selon l'invention met en œuvre les étapes suivantes :

- génération par le module de contrôle 140, en fonction des signaux Si, i = 1 à N, qui lui sont fournis, des signaux d'alimentation respectifs Si_alim, et fourniture de Si_alim aux éléments unitaires rayonnants de la zone Zi où :

dans un premier mode d'alimentation dit simple, le bloc de contrôle 140 génère le signal d'alimentation Si_alim, i= 1 à N, tel que Si_alim = Si, et le fournit à chaque élément rayonnant unitaire de la zone Zi pour émission radiofréquence, par ce dernier, de Si_alim ; et/ou

dans un deuxième mode d'alimentation dit contigu,le bloc de contrôle 140 génère le signal d'alimentation Si_alim, i= 1 à N, tel que $Si\_alim = \sum_{n=1}^{i} Sn$ , et le fournit à chaque élément rayonnant unitaire de la zone Zi pour émission par ce dernier de Si_alim ;

dans un mode de réalisation, le nombre N est configurable, ainsi que le mode d'alimentation et la répartition des éléments unitaires rayonnants en les zones Zi, i= 1 à N ;

- émission des faisceaux Fi résultant du rayonnement des éléments unitaires rayonnants ainsi alimentés.

Cette invention permet de réaliser une antenne multifaisceaux en utilisant des éléments rayonnants discrets ou des technologies d'antennes à rayonnements à fentes dans plusieurs modes de réalisation et stimulation : anneaux concentriques, rectangles concentriques, papillon, polygones... avec stimulation contiguë ou simple.

Cela permet de disposer de plusieurs faisceaux concentriques avec potentiellement des ouvertures identiques ou différentes en garantissant certaines maîtrises des niveaux des lobes secondaires, de la polarisation d'émission (linéaire ou circulaire) et de l'orientation des faisceaux. Ces modes de réalisations permettent de maîtriser l'ouverture d'un faisceau à une fréquence porteuse unique ou de générer plusieurs faisceaux concentriques à des fréquences porteuses différentes de même ouverture ou non.

L'invention a été décrite ci-dessus dans le cas du guidage d'un aéronef, mais l'invention a d'autres applications telles que : le guidage de tout engin, la télécommunication avec une antenne à ouverture ajustable, notamment pour télécommuniquer avec des objets en déplacement.

## Revendications

**1.** Système d'antenne (100) comprenant un réseau (120) d'éléments unitaires (180) rayonnants et un module de contrôle (140), le système d'antenne (100) étant **caractérisé en ce que** :

- le module de contrôle (140) est adapté pour, étant donné une répartition des éléments unitaires en N zones préfinies Z1, ..., ZN, N étant supérieur ou égal à 2, comportant chacune plusieurs éléments unitaires rayonnants, alimenter chaque élément unitaire de chaque zone Zi avec un signal d'alimentation Si_alim spécifique à la zone et fonction d'au moins un signal Si, lesdits N signaux Si, i= 1 à N étant séparables selon une propriété prédéfinie ;
- pour tout i =1 à N-1, la zone Zi est inscrite autour de la zone Zi+1 et chaque zone Zi, i=1 à N, d'éléments rayonnants est adaptée pour émettre spécifiquement ledit signal, Si_alim , selon un faisceau d'émission respectif avec une ouverture de faisceau respective, Fi, lesdits faisceaux Fi, i= 1 à N étant axés autour d'un axe commun (Z), normal à la surface rayonnante et passant par son centre (O), chaque zone étant symétrique par rapport audit centre.

**2.** Système d'antenne (100) selon la revendication 1, dans lequel les éléments unitaires rayonnants sont des patchs (180) et/ou des fentes.

**3.** Système d'antenne (100) selon la revendication 1 ou 2, dans lequel le module de contrôle (140) est adapté pour opérer selon un mode de stimulation simple et/ou un mode de stimulation contiguë, dans lequel :

dans le mode de stimulation simple, le module de contrôle alimente exclusivement les éléments unitaires (180) de la zone Zi avec le signal d'alimentation Si_alim = Si, i= 1 à N ;

dans le mode de stimulation contiguë, le module de contrôle alimente exclusivement les éléments unitaires de la zone Zi avec le signal d'alimentation $Si\_alim = \sum_{n=1}^{i} Sn$ , i= 1 à N.

**4.** Système d'antenne selon l'une des revendications précédentes, dans lequel la répartition des éléments unitaires (140) en N zones correspond à l'une des configurations suivantes :

- lesdites zones sont concentriques et apposées, de forme annulaire ou de type bordure rectangulaire ;

- chaque zone Zi comporte au moins deux blocs d'éléments unitaires rayonnants, i= 1 à N, lesdites deux blocs de la zone Zi encadrant lesdites deux blocs de la zone Zi+1 ;
- au moins un triangle d'éléments rayonnants unitaires est constitué, comportant une succession de N blocs adjacents d'éléments unitaires appartenant respectivement aux N zones successives Zi, i= 1 à N, chaque bloc comprenant une ou plusieurs rangées d'éléments unitaires disposés parallèlement à la base du triangle opposée au centre de l'antenne qui est aussi un sommet du triangle ;
- des triangles d'éléments rayonnants unitaires sont constitués et joints par leur sommet opposé à leur base, les triangles étant similaires et comportant une succession de N blocs apposés d'éléments unitaires appartenant respectivement aux N zones successives Zi, i= 1 à N, et disposés parallèlement à la base.

5. Procédé d'émission utilisant un système d'antenne (100) comprenant un réseau (120) d'éléments unitaires rayonnants (180) et un module de contrôle, ledit procédé étant **caractérisé en ce qu'**il comprend les étapes suivantes :

- étant donné une répartition des éléments unitaires en N zones préfinies Z1, ..., ZN, N étant supérieur ou égal à 2, comportant chacune plusieurs éléments unitaires rayonnants, alimenter, par le module de contrôle, chaque élément unitaire de chaque zone Zi avec un signal d'alimentation Si_alim spécifique à la zone et fonction d'au moins un signal Si, lesdits N signaux Si, i= 1 à N étant séparables selon une propriété prédéfinie ;
- émission par chaque zone Zi, i=1 à N, d'éléments rayonnants spécifiquement dudit signal, Si_alim, selon un faisceau d'émission respectif avec une ouverture de faisceau respective, Fi, pour tout i =1 à N-1, lesdits faisceaux Fi, i= 1 à N étant axés autour d'un axe commun, normal à la surface rayonnante et passant par son centre (O) et la zone Zi étant inscrite autour de la zone Zi+1, chaque zone étant symétrique par rapport audit centre,.

6. Procédé d'émission selon la revendication 5, selon lequel les éléments unitaires rayonnants sont des patchs (180) et/ou des fentes.

7. Procédé d'émission selon la revendication 5 ou 6, selon lequel le module de contrôle (140) opère selon un mode de stimulation simple et/ou un mode de stimulation contigüe, où :

dans le mode de stimulation simple, le module de contrôle alimente exclusivement les éléments unitaires (180) de la zone Zi avec le signal d'alimentation Si_alim = Si, i= 1 à N ;
dans le mode de stimulation contigüe, le module de contrôle alimente exclusivement les éléments unitaires de la zone Zi avec le signal d'alimentation $Si\_alim = \sum_{n=1}^{i} Sn$, i= 1 à N.

8. Procédé d'émission selon l'une des revendications 5 à 7, selon lequel la répartition des éléments unitaires (180) en N zones correspond à l'une des configurations suivantes :

- lesdites zones sont concentriques et apposées, de forme annulaire ou de type bordure rectangulaire ;
- chaque zone Zi comporte au moins deux blocs d'éléments unitaires rayonnants, i= 1 à N, lesdites deux blocs de la zone Zi encadrant lesdites deux blocs de la zone Zi+1 ;
- au moins un triangle (T) d'éléments rayonnants unitaires est constitué, comportant une succession de N blocs adjacents d'éléments unitaires appartenant respectivement aux N zones successives Zi, i= 1 à N, chaque bloc comprenant une ou plusieurs rangées d'éléments unitaires disposés parallèlement à la base du triangle opposée au centre de l'antenne qui est aussi un sommet du triangle ;
- des triangles d'éléments rayonnants unitaires sont constitués et joints par leur sommet opposé à leur base, les triangles étant similaires et comportant une succession de N blocs apposés d'éléments unitaires appartenant respectivement aux N zones successives Zi, i= 1 à N, et disposés parallèlement à la base.

FIG.1

**FIG.2**

## FIG.3

FIG.4

EP 3 945 334 A1

**FIG.5**

ST_C

ST_S

## FIG.6

120

Z1  Z2  Z3  Z4  Z5  Z6  180  Z5  Z4  Z3  Z2  Z1

Y

O

X

ALIM RF

**FIG.7**

FIG.8

FIG.9

FIG.10

**FIG.11**

120

T3
b
B
y
T4
T5
T6
O
T2
T1
X
T1'
T6'
T2'
T5'
T3'
T4'
L

## FIG.12

Europäisches
Patentamt

European
Patent Office

Office européen
des brevets

**RAPPORT DE RECHERCHE EUROPEENNE**

Numéro de la demande

EP 21 18 8436

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | US 5 045 859 A (YETTER FORREST G [US]) 3 septembre 1991 (1991-09-03) * colonne 5, ligne 14 - colonne 6, ligne 57; figure 1 * ----- | 1-8 | INV. G01S1/14 G01S1/04 |
| A | US 5 838 276 A (CHAPMAN AUBREY I [US] ET AL) 17 novembre 1998 (1998-11-17) * colonne 9, lignes 23-58; revendications 1, 3, 7; figures A1, 1B * ----- | 1-8 | |
| A | US 2020/200850 A1 (PIAZZA DIEGO [IT] ET AL) 25 juin 2020 (2020-06-25) * alinéas [0035] - [0040]; revendications 1-3; figures 1,2, 3, 6 * ----- | 1-8 | |

**DOMAINES TECHNIQUES RECHERCHES (IPC)**

G01S

Le présent rapport a été établi pour toutes les revendications

| Lieu de la recherche | Date d'achèvement de la recherche | Examinateur |
|---|---|---|
| Munich | 29 novembre 2021 | Ciccarese, Corrado |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

..........................................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 21 18 8436

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

29-11-2021

| Document brevet cité au rapport de recherche | | Date de publication | Membre(s) de la famille de brevet(s) | | Date de publication |
|---|---|---|---|---|---|
| US 5045859 | A | 03-09-1991 | AUCUN | | |
| US 5838276 | A | 17-11-1998 | AT | 283494 T | 15-12-2004 |
| | | | AU | 719218 B2 | 04-05-2000 |
| | | | CA | 2270418 A1 | 12-03-1998 |
| | | | DE | 69731723 T2 | 10-11-2005 |
| | | | EP | 0858606 A1 | 19-08-1998 |
| | | | US | 5838276 A | 17-11-1998 |
| | | | WO | 9810305 A1 | 12-03-1998 |
| US 2020200850 | A1 | 25-06-2020 | BR | 112019026429 A2 | 14-07-2020 |
| | | | CN | 110741272 A | 31-01-2020 |
| | | | EP | 3639050 A1 | 22-04-2020 |
| | | | US | 2020200850 A1 | 25-06-2020 |
| | | | WO | 2018229681 A1 | 20-12-2018 |

EPO FORM P0460

Pour tout renseignement concernant cette annexe : voir Journal Officiel de l'Office européen des brevets, No.12/82

**RÉFÉRENCES CITÉES DANS LA DESCRIPTION**

**Documents brevets cités dans la description**

- FR 1913300